(19) Europäisches Patentamt
European Patent Office
Office européen des brevets

(11) **EP 4 671 702 A1**

(12) **EUROPEAN PATENT APPLICATION**

(43) Date of publication:
**31.12.2025 Bulletin 2026/01**

(21) Application number: **24184061.0**

(22) Date of filing: **24.06.2024**

(51) International Patent Classification (IPC):
**G01F 1/667** (2022.01)      **G01F 25/10** (2022.01)

(52) Cooperative Patent Classification (CPC):
**G01F 25/10; G01F 1/667**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Kamstrup A/S**
**8660 Skanderborg (DK)**

(72) Inventor: **Sørensen, Jens Lykke**
**8660 Skanderborg (DK)**

(74) Representative: **Patentanwälte Hemmer Lindfeld Frese**
**Partnerschaft mbB**
**Wallstraße 33a**
**23560 Lübeck (DE)**

(54) **ULTRASONIC FLOW METER AND A METHOD FOR DETERMINING AN OPERATIONAL CONDITION OF SUCH**

(57)     The present disclosure is directed to a method for determining an operational condition of an ultrasonic flow meter (5, 6), the method comprising:
- continuously, regularly, and/or on demand determining values of at least two different pre-determined operational variables (q, $t_{abs}$, $V_{pp}$, $T_{internal}$, $T_{fluid}$, $\Delta\varphi$) of the ultrasonic flow meter (5, 6);
- for each of the at least two different pre-determined operational variables (q, $t_{abs}$, $V_{pp}$, $T_{internal}$, $T_{fluid}$, $\Delta\varphi$), filling a variable-specific histogram by aggregating the occurrences of the determined values of said operational variable (q, $t_{abs}$, $V_{pp}$, $T_{internal}$, $T_{fluid}$, $\Delta\varphi$) in bins of said histogram; and
- determining an operational condition of the ultrasonic flow meter (5, 6) based on a statistical distribution in one of the histograms if a statistical distribution in another one of the histograms is consistent with said operational condition of the ultrasonic flow meter (5, 6).

Fig. 1

EP 4 671 702 A1

## Description

TECHNICAL FIELD

The present disclosure is directed to an ultrasonic flow meter and a method for determining an operational condition of such. In particular, the ultrasonic flow meter is or is part of a water meter or thermal energy meter used by utility providers to bill consumers of water or thermal energy according to their consumption.

BACKGROUND

A utility provider typically operates a pipe network for supplying water or thermal energy to a plurality of consumers, i.e. households, companies and/or industry. In order to determine consumption of water or thermal energy at each consumer for billing purposes, each household is typically equipped with a flow meter. Strict legal regulations apply for any such flow meters in the pipe network, so that they are sometimes referred to as "legal" meters.

The legal regulations may for example demand that each flow meter is tested and validated for accuracy before shipping and installation. It may also be a legal demand that installed flow meters are inspected, serviced or replaced in regular service intervals. However, as the inspection costs for each flow meter are high, only small control samples of all flow meters are usually inspected. The majority of the flow meters may be uninspected in operation for years and even decades before their accuracy is re-verified.

Hence, it would be desirable if the flow meters were able to determine their operational condition either completely autonomously or by use of external devices. Thus, there is a need for a self-diagnostic function of the flow meter itself or for a flow meter allowing for a diagnostic function of an external device.

A health monitoring method for flow meters is described in WO 2020/112950 A1. However, known health monitoring methods may only give a snap-shot view of the current operational condition and no historical picture of what operational conditions the flow meter has experienced. Furthermore, it is desirable not only to know the health of the flow meter itself, but also the more general operational condition including the flow meter's installation situation. Finally, it is a general challenge in health monitoring to reduce the risk of false diagnoses, i.e. incorrectly flagging a health issue for a properly working flow meter.

It is therefore an object of the present invention to provide a method and an ultrasonic flow meter that more reliably allows determining an operational condition of the ultrasonic flow meter, including its installation situation and taking into account a historical information about what operational conditions the flow meter has experienced.

SUMMARY

According to a first aspect of the present invention, a method is provided for determining an operational condition of an ultrasonic flow meter, the method comprising:

- continuously, regularly, and/or on demand determining values of at least two different pre-determined operational variables of the ultrasonic flow meter;
- for each of the at least two different pre-determined operational variables, filling a variable-specific histogram by aggregating the occurrences of the determined values of said operational variable in bins of said histogram; and
- determining an operational condition of the ultrasonic flow meter based on a statistical distribution in one of the histograms if a statistical distribution in another one of the histograms is consistent with said operational condition of the ultrasonic flow meter.

Thus, the core of the invention is the establishment of at least two histograms, which log the operational variables of the flow meter preferably since it was installed, or since it was last serviced. The invention uses data logging of two or more histograms of data from the flow meter and uses them both to make an evaluation of the operational condition of the flow meter. An example for pre-determined operational variables may be an absolute transit time $t_{abs}$ of an ultrasonic signal measured in microseconds, a determined flow rate q in cubic meters per hour, and/or a signal strength $V_{pp}$ of the ultrasonic transducers of the ultrasonic flow meter in millivolts. The absolute transit time $t_{abs}$ may be determined as an average time-of-flight (TOF) in microseconds of ultrasonic signals between the ultrasonic transducers of the ultrasonic flow meter, e.g.

defined by $t_{abs} = \sqrt{t_{AB} t_{BA}} \approx (t_{AB} + t_{BA})/2$, wherein $t_{AB}$ is the time the signal takes from ultrasonic transducer A to ultrasonic transducer B and $t_{BA}$ is the time the signal takes back from ultrasonic transducer B to ultrasonic transducer A.

By comparing the distributions in the at least two histograms it can be decided if there is consistency between them to support the same diagnosis of the operational condition of the ultrasonic flow meter. If the two histograms are not consistent, then one of the histograms may support a false diagnosis, so that the diagnosis may not be trusted. If they are consistent, e.g. a data cluster in one histogram is confirmed by a data cluster on the other histogram, the diagnosis of the operational condition is more trustworthy. Examples of consistency and non-consistency between histograms are given in this description.

An advantage with the invention is that the utility provider gets more detailed and more reliable information about the causes of a deterioration of the flow meter. It may be possible to differentiate if a flow meter error originates from the installation situation or from the flow meter itself, which may trigger different appropriate service actions. For example, if a deterioration is caused by a defect valve upstream of the flow meter causing regular cavitation events, it does not make sense to replace the flow meter or any electronics in the flow meter without fixing the problem with the upstream valve.

A further advantage of the invention is the creation of the ability to plan maintenance in good time. If the condition of a flow meter is deteriorating predictively over time it is possible to plan maintenance years in advance. Actual histograms of a current service interval may, for instance, be compared to legacy histograms of a previous service interval.

A further advantage is that the invention may be realized with data that is already registered in existing flow meters, so that no extra equipment or hardware changes are needed. Furthermore, no extra measurements are necessary if the values of the at least two different pre-determined operational variables of the ultrasonic flow meter are determined for each flow measurement that measures these operational variables anyway for the flow measurement.

A further advantage of the invention is that the two histograms do not take up much electronic memory capacity, especially if no time stamp is recorded with the histogram entries.

As pointed out above, an example of a pre-determined operational variable is a signal strength $V_{pp}$ of the ultrasonic transducers of the ultrasonic flow meter, which is monitored and logged. Before shipping of the ultrasonic flow meter, the signal strength of the brand new ultrasonic transducer of the ultrasonic flow meter may be measured and stored as an expected signal strength in a memory of the flow meter. If a peak in a signal strength $V_{pp}$ histogram is offset from the expected signal strength, a problem with the ultrasonic transducer may be indicated.

A histogram of signal strengths $V_{pp}$ may, for example, be used for determining whether the flow meter has been exposed to cavitation. If there is cavitation, the signal strength $V_{pp}$ will be reduced while the absolute transit time $t_{abs}$ will be increased. Cavitation is a problem for flow meters, because it has on the one hand a damaging effect on the flow meter structure and hardware, and on the other hand it impairs the flow measurement. Cavitation exposure may be one of the operational conditions of the flow meter that the invention is able to determine.

Another operational condition of the flow meter that the invention is preferably able to determine is fouling/scaling depositions. Such fouling/scaling depositions are often equally distributed on the surface of the ultrasonic transducers and on ultrasound-reflecting walls in the flow channel, which negatively affects the flow measurement. The problem of fouling/scaling depositions may be reduced in district heating, because the water used therein as heat transfer medium may contain chemical additives that suppress fouling/scaling deposition. In water distribution networks, however, mineral depositions and/or growth of biological films is often inevitable. A histogram of signal strengths $V_{pp}$ in conjunction with a relatively normal histogram of absolute transit time $t_{abs}$ may indicate an existence of a scaling layer. Such a diagnosis may be further validated by a piezo test functionality that shows a shift of a transducer resonance frequency and a damping caused by scaling.

Another operational condition of the flow meter that the invention is preferably able to determine is a broken ultrasonic transducer. The distributions in the histograms of signal strength $V_{pp}$ and absolute transit time $t_{abs}$ may both deviate from an expected distribution in case of a broken ultrasonic transducer. In order to verify this operational condition, a piezo test functionality may be used to test the integrity of a piezo element of an ultrasonic transducer. The piezo element may be subjected to a diagnostic test signal in form of an excitation test signal. The excitation test signal may have a frequency at or close to one of the resonance frequencies of the tested piezo element, e.g. 1 MHz in axial direction or approximately 200 kHz in radial direction expansion. When the diagnostic test signal is stopped, the resonating piezo element shows a ring down behaviour that can be analysed as a diagnostic test response signal in comparison with a typical ring down behaviour of an intact piezo element. Another way of testing may be to use a step signal as a test signal (a DC signal) and to measure the decay over time of the DC voltage of the piezo element of the ultrasonic transducer. If a piezo element is broken to pieces, the signal strength $V_{pp}$ will likely only be a fraction of an intact piezo element, because less energy is absorbed and re-emitted by a broken piezo element compared to an intact piezo element.

It should be noted that flow meters are mostly battery-powered and power-saving is of prime importance for battery-powered flow meters to have a guaranteed lifetime of many years. It is in principle possible to implement this piezo test functionality in the firmware of the flow meter to automatically perform this verification autonomously by the flow meter itself. However, as the verification of the operational condition of a broken ultrasonic transducer by a diagnostic test signal may consume significant power and data, it is preferred that the piezo test functionality is implemented in an external device of a service technician who connects the external device with the flow meter either in regular service intervals or when an extraordinary servicing is necessary or indicated.

Optionally, the method may further comprise:

- continuously, regularly, and/or on demand monitoring if error events occur that fulfil one or more of a plurality of pre-determined error type criteria;

- aggregating occurrences of said error events preferably per error type criterion; and
- triggering the step of determining the operational condition of the ultrasonic flow meter by receiving a request command and/or when a total or relative number of error events exceeds a pre-determined threshold.

An error code generator may already be present in most existing flow meters. Such an error code generator checks for each flow measurement whether certain measured values, e.g. the signal strength $V_{pp}$, fulfil pre-determined error type criteria. If so, a corresponding error code is generated and stored with the flow measurement. For example, an error code "0" may indicate the absence of an error, i.e. no error. Another error code may be generated if the signal strength $V_{pp}$ falls below a threshold, e.g. 80% of an initial signal strength. The occurrences of such error codes, i.e. error events that fulfil pre-determined error type criteria, are preferably aggregated, i.e. counted, to trigger the step of determining the operational condition of the ultrasonic flow meter when a total or relative number of such error events exceeds a pre-determined threshold. It should be noted that the aggregation of error events is independent of the filling of the histograms that is performed in parallel.

Optionally, the histograms that are used to determine the operational condition of the ultrasonic flow meter may be dependent on which type of error events has occurred in a total or relative number exceeding a pre-determined threshold. For example, in case the error type of a too low signal strength $V_{pp}$ has occurred too often, the histogram of the signal strength $V_{pp}$ most likely gives useful information about the operational condition of the ultrasonic flow meter, e.g. by how much the signal strength $V_{pp}$ is statistically reduced.

Optionally, an algorithm may define which histograms are used for which type of error events, wherein the algorithm is executed by a health monitoring module, wherein the health monitoring module is integrated into the ultrasonic flow meter, into a mobile device being in communication connection with the ultrasonic flow meter, and/or into a remote server being in communication connection with the ultrasonic flow meter. If the health monitoring module is not implemented in the firmware of the ultrasonic flow meter, the ultrasonic flow meter only aggregates all histograms for an external health monitoring module to download and analyse offline. The ultrasonic flow meter may be configured to send the histograms regularly or on demand via an automatic meter reading (AMR) infrastructure wirelessly to a remote server of a head-end system (HES). However, such sending consumes power and communication bandwidth, so that it is preferred if the health monitoring module is integrated in the ultrasonic flow meter itself and/or in a mobile device that a service technician can connect to the ultrasonic flow meter. However, irrespective of whether the health monitoring module is integrated into the ultrasonic flow meter, into a mobile device being in communication connection with the ultrasonic flow meter, and/or into a remote server being in communication connection with the ultrasonic flow meter, the algorithm performs the step of determining the operational condition of the ultrasonic flow meter preferably fully automatic without human interpretation of the histograms.

Optionally, one of the histograms for determining the operational condition of the ultrasonic flow meter may be correlated by a physical model with the other one of the histograms being consistent with said operational condition of the ultrasonic flow meter. Such a physical model may, for example, be the temperature-dependence of the speed of sound in the fluid. So, a histogram of the absolute transit time $t_{abs}$ correlates with a histogram of fluid temperatures, because the speed of sound increases with fluid temperature. So, a histogram of the absolute transit time $t_{abs}$ may show a statistical relevant shift to lower absolute transit times $t_{abs}$ which may be consistent with a statistical relevant shift in the fluid temperature histogram to higher fluid temperatures. In this case, a histogram of the absolute transit time $t_{abs}$ with a broad distribution alone may support a diagnosis of a scaling layer. If the distribution of the fluid temperature histogram is also broad and can explain the broad distribution of the absolute transit time $t_{abs}$, it is non-consistent with the diagnosis of a scaling layer. Otherwise, the distribution of the fluid temperature histogram may confirm the diagnosis of a scaling layer or at least suggests further analysis.

Optionally, an absolute value of a correlation coefficient between said one of the histograms and said another one of the histograms is at least 0.6. With sufficient statistics available in the histograms, such a correlation may be enough to reduce the risk of false daignoses, i.e. the risk of determining an operational condition of the ultrasonic flow meter that the flow meter does not have.

Optionally, the at least two different pre-determined operational variables are selected from the group comprising:

- a flow rate q determined by the ultrasonic flow meter,
- a signal strength $V_{pp}$ of at least one ultrasonic transducer of the ultrasonic flow meter,
- an absolute transit time $t_{abs}$ of an ultrasonic signal being exchanged by at least one ultrasonic transducer of the ultrasonic flow meter,
- a phase shift $\Delta cp$ between two ultrasonic signals being exchanged by at least one ultrasonic transducer of the ultrasonic flow meter,
- a fluid temperature $T_{fluid}$ measured by a temperature sensor being in thermal contact with the fluid flowing through the ultrasonic flow meter, and

- an internal temperature $T_{internal}$ within the ultrasonic flow meter measured by an internal temperature sensor of the ultrasonic flow meter.

Preferably, the ultrasonic flow meter is configured to fill variable-specific histograms for each of these operational variables with each flow measurement it regularly performs for determining consumption of water or thermal energy. As a thermal energy meter comprises fluid temperature sensors for fluid temperature measurements anyway, the present invention is particularly beneficial for ultrasonic flow meters used in thermal energy meters.

Optionally, determining the operational condition of the ultrasonic flow meter may further comprise determining whether or not the ultrasonic flow meter has been exposed to cavitation to a flow measurement impairing degree, wherein distributions of

- a histogram of flow rates q determined by the ultrasonic flow meter,
- a histogram of signal strengths $V_{pp}$ of at least one ultrasonic transducer of the ultrasonic flow meter, and
- a histogram of absolute transit times $t_{abs}$ of an ultrasonic signal being exchanged by at least one ultrasonic transducer of the ultrasonic flow meter,

are in combined evaluation indicative of whether or not the ultrasonic flow meter has been exposed to cavitation to a flow measurement impairing degree. When the ultrasonic flow meter is exposed to cavitation, then the signal strength $V_{pp}$ is low and the absolute transit time $t_{abs}$ is high. Cavitation has an abrasive and damaging effect on the structure of the ultrasonic flow meter and it impairs the flow measurement. If cavitation occurs regularly, the signal strength $V_{pp}$ histogram is expected to show a statistically relevant shift to lower values. A statistically relevant shift to higher values in the absolute transit time $t_{abs}$ histogram is then consistent with the diagnosis of regular cavitation. A further histogram of the flow rate q may be included in the combined evaluation, wherein a statistically relevant shift in the q-histogram towards high flow rates may be an indication that the installation causes the cavitation. An appropriate service action would be to check the installation situation of the ultrasonic flow meter, i.e. if it is correctly installed itself and whether devices installed upstream, e.g. valves, are installed and working properly.

Optionally, determining the operational condition of the ultrasonic flow meter may further comprise determining hardware degradation in the electronics of the ultrasonic flow meter and/or in a fluid temperature sensor being in thermal contact with the fluid flowing through the ultrasonic flow meter, wherein discrepancies between distributions of

- a histogram of fluid temperatures $T_{fluid}$ measured by the fluid temperature sensor, and
- a histogram of internal temperatures $T_{internal}$ within the ultrasonic flow meter measured by an internal temperature sensor of the ultrasonic flow meter, and/or
- a histogram of absolute transit times $t_{abs}$ of an ultrasonic signal being exchanged by at least one ultrasonic transducer of the ultrasonic flow meter,

are indicative of hardware degradation in the electronics of the ultrasonic flow meter and/or in the fluid temperature sensor. The internal temperatures $T_{internal}$ may be recorded over the complete lifetime of the ultrasonic flow meter without being ever deleted. If the histogram of internal temperatures $T_{internal}$ shows that the internal temperature $T_{internal}$ was higher than it can be expected from the histogram of fluid temperatures $T_{fluid}$, the diagnosis is supported that the operational condition of the ultrasonic flow meter is a hardware degradation in the electronics of the ultrasonic flow meter showing as additional electrical resistance that generates heat. An appropriate service action would be to repair or replace the electronics of the ultrasonic flow meter. As an alternative to the histogram of internal temperatures $T_{internal}$, or in addition, a histogram of absolute transit times $t_{abs}$ may be very useful to determine hardware degradation in the electronics of the ultrasonic flow meter.

Optionally, a distribution of

- a histogram of fluid temperatures $T_{fluid}$ measured by a fluid temperature sensor being in thermal contact with the fluid flowing through the ultrasonic flow meter, and
- a known speed of sound in the fluid as a function of the fluid temperature $T_{fluid}$,

may be used in combined evaluation to confirm an operational condition of the ultrasonic flow meter based on a distribution of a histogram of absolute transit times $t_{abs}$ of an ultrasonic signal being exchanged by at least one ultrasonic transducer of the ultrasonic flow meter. This is beneficial, because there is a physical correlation between the fluid temperatures $T_{fluid}$ and the absolute transit times $t_{abs}$. This is in particular beneficial for ultrasonic flow meter of a thermal energy meter, because the thermal energy meter comprises a fluid temperature sensor anyway and the fluid temperature is expected to be more stable than the water temperature in a water supply network.

Optionally, certain bins of histograms may be neglected for determining the operational condition of the ultrasonic flow meter, wherein the neglected bins are filled with less than a minimum number of values and/or lie outside a relevant variable range. To make a more robust assessment of the operational condition of the ultrasonic flow meter, it is beneficial to consider only those histogram bins that are filled with sufficient statistics.

Optionally, the histograms may be filled with values having no time stamp. As time stamps for each flow measurement would consume considerable memory space, it is beneficial to fill the histograms without timestamps. The histograms as a whole, however, may have a time stamp when the filling started and/or ended.

Optionally, the method may further comprise:

- stopping filling one or more of the histograms,
- storing the one or more stopped histograms as legacy histograms,
- emptying the one or more stopped histograms,
- restarting filling the emptied histograms as actual histograms,

wherein determining the operational condition of the ultrasonic flow meter further comprises comparing one or more of the actual histograms with one or more of the corresponding legacy histograms. This may be in particular useful when a service technician reads the histograms with a mobile device connected to the ultrasonic flow meter. The comparison of the actual histograms with the legacy histograms gives an indication of how the operational condition of the ultrasonic flow meter has developed. This can, for instance, be used to check the success of a previous service action.

Optionally, determining the operational condition of the ultrasonic flow meter may further comprise comparing one or more of the histograms with one or more of reference histograms, wherein the reference histograms are stored in the ultrasonic flow meter before shipping of the ultrasonic flow meter. For example, a reference histogram of signal strengths $V_{pp}$ may be filled during legally required validation tests performed before shipping of the ultrasonic flow meter. Such a reference histogram can serve as a baseline to be compared with the histogram of signal strengths $V_{pp}$ filled during operation of the installed ultrasonic flow meter.

Optionally, the method may further comprise

- continuously, regularly, and/or on demand sending, by a health monitoring module, at least one diagnostic test signal to at least one ultrasonic transducer of the ultrasonic flow meter, and
- receiving, by the health monitoring module, at least one diagnostic test response signal from the at least one ultrasonic transducer of the ultrasonic flow meter,

wherein determining the operational condition of the ultrasonic flow meter further comprises evaluating the received diagnostic test response signal. As explained above, in order to save battery power, such a piezo test functionality for testing a piezo element of an ultrasonic transducer of the ultrasonic flow meter is preferably performed by a health monitoring module being executed on a connected mobile device of a service technician.

Optionally, the at least one diagnostic test response signal may be a ring-down signal. The ring-down signal gives an indication of whether a piezo element is broken and/or covered by a scaling layer. Furthermore, the circuitry of the ultrasonic transducer as such is tested by this piezo test functionality, because a lack of a ring-down signal may be indicative of a broken connection in the circuitry.

Optionally, the at least one diagnostic test signal may differ from regular signals for flow measurement, wherein the at least one diagnostic test signal is appended to regular signals for flow measurement or sent between two regular signals for flow measurement. As this consumes considerable battery-power, the piezo test functionality may only be triggered by the ultrasonic flow meter itself when a diagnosis of a broken or scaling-covered piezo element is supported by at least two histograms and needs to be verified further.

Optionally, the at least one diagnostic test signal is a periodic signal with a frequency that corresponds to a radial or axial resonance frequency of a piezo element of the at least one ultrasonic transducer of the ultrasonic flow meter, preferably in a range of 50 kHz to 1.5 MHz. For example, if the radial extension of a piezo element is five times larger than its axial thickness, then the axial resonance frequency, e.g. about 1 MHz, is about five time larger than its radial resonance frequency, e.g. about 200 kHz. Alternatively, or in addition, the at least one diagnostic test signal may be a step-function-shaped DC signal used to measure the decay over time of the DC voltage of the piezo element of the ultrasonic transducer.

Optionally, determining the operational condition of the ultrasonic flow meter may further comprise detecting frequency shifts of a high frequency ultrasonic oscillator used for driving at least one ultrasonic transducer of the ultrasonic flow meter relative to a frequency of a low frequency crystal clock of the flow meter, wherein a detected frequency shift triggers an error event and/or a frequency correction action. The determined phase difference $\Delta\varphi$ can be negatively influenced by a long term by drift of the high frequency electronic oscillator that excites the ultrasonic transducers and against which all times and phases are measured.

In flow meters for measuring consumption of water or thermal energy, a relatively low frequency real time crystal clock oscillator is typically present since the time of consumption must be logged and time-stamped electronically. A drift of such a real time crystal clock is usually low to allow a flow meter operation over many years of flow meter operation. By comparing the high frequency oscillator with the real time crystal clock, utilizing that the drift of the latter is negligent compared to the former, an eventual drift of the high frequency ultrasonic oscillator can be quantified. Such a comparison can e.g. be performed with a gated counter counting high frequency oscillations gated by the real time crystal clock. Should the comparison result in an intolerable discrepancy of the high frequency oscillator operating frequency relative to its nominal value, an error code can be generated and/or a correction employed.

Optionally, determining the operational condition of the ultrasonic flow meter may be at least partly performed by a remote server being in communication connection with the ultrasonic flow meter, wherein the remote server has received wirelessly information about the histograms from the ultrasonic flow meter. This may consume considerable amounts of power and/or bandwidth of the ultrasonic flow meter, but it may in certain cases be justified if a personal visit of a service technician can be avoided or is not available in the time frame needed.

According to another aspect of the present invention, a computer program is provided comprising instructions which, when the program is executed by an ultrasonic flow meter, cause the ultrasonic flow meter to carry out the method described above.

According to another aspect of the present invention, an ultrasonic flow meter is provided being configured to carry out the method described above and/or having installed a computer program as described above.

SUMMARY OF THE DRAWINGS

Embodiments of the present disclosure will now be described by way of example with reference to the following figures of which:

Fig. 1 shows schematically an example of a pipe network supplying a plurality of consumer households with water or thermal energy;

Figs. 2a,b shows a longitudinal cross-sectional view of an embodiment of an ultrasonic flow meter according to the present invention;

Fig. 3 shows a flow chart of an embodiment of the method according to the present invention;

Fig. 4 shows a histogram of measurement occurrences filled in flow q bins of five $m^3/h$;

Figs. 5a,b show different histograms of measurement occurrences filled in absolute transit time $t_{abs}$ bins of one microsecond;

Figs. 6a,b show different histograms of measurement occurrences filled in signal strength $V_{pp}$ bins of 25 millivolts;

Figs. 7a shows a diagnostic test response signal overtime received during testing an intact ultrasonic transducer by a diagnostic test signal;

Figs. 7b shows the diagnostic test response signal of Fig. 7a as a Fourier transformation in the frequency domain;

Figs. 8a shows a diagnostic test response signal overtime received during testing a broken ultrasonic transducer by a diagnostic test signal;

Figs. 8b shows the diagnostic test response signal of Fig. 8a as a Fourier transformation in the frequency domain;

Figs. 9a shows a diagnostic test response signal overtime received during testing an ultrasonic transducer by a diagnostic test signal, wherein the ultrasonic transducer is covered by a scaling layer;

Figs. 9b shows the diagnostic test response signal of Fig. 9a as a Fourier transformation in the frequency domain; and

Fig. 10 shows an example of a physical model in form of the signal travel time as a function of the fluid temperature.

DETAILED DESCRIPTION

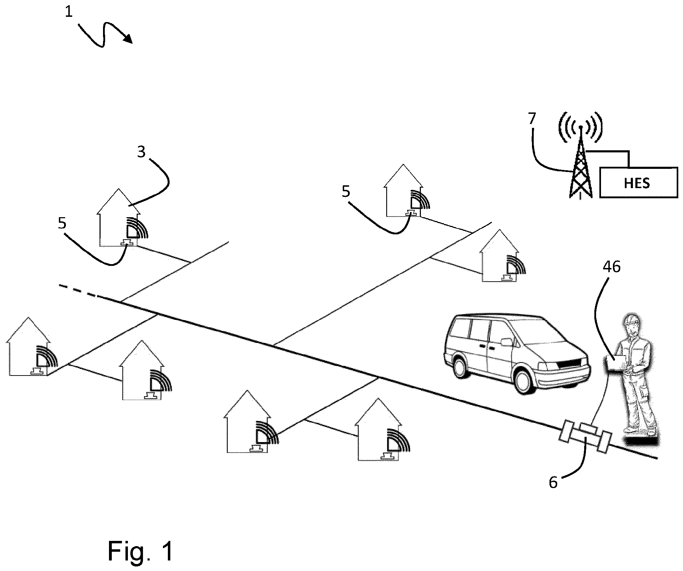

Fig. 1 shows a pipe network 1 of a water supply system or a district heating system for supplying a plurality of consumer households 3 with water or with thermal energy. An operator of the pipe network 1, for example a utility provider, supplies the pipe network 1 with water and/or thermal energy. The consumption of water or thermal energy is measured at each consumer household 3 by a water meter or a heat meter, respectively, so that the utility provider is able to bill the consumer households 3 according to their consumption. irrespective of whether the consumption of water or thermal energy is measured, an ultrasonic flow meter 5 is used in the water meter or heat meter to measure a fluid flow. In case of a heat meter, a temperature difference between a feed line and a return line is measured in addition. A data collecting station 7 collects wirelessly data that is sent by a plurality of meters. A remote server of a head-end-system HES then processes all data collected by the data collecting station 7 for billing and/or monitoring purposes. The pipe network 1 may further comprise a district ultrasonic flow meter 6 for measuring the fluid flow through a main line supplying a plurality of consumer households 3. The present invention is applicable for both the residential ultrasonic flow meters 5 being installed at the consumer households 3 and for district ultrasonic flow meters 6 being installed at a main supply line of the pipe network 1.

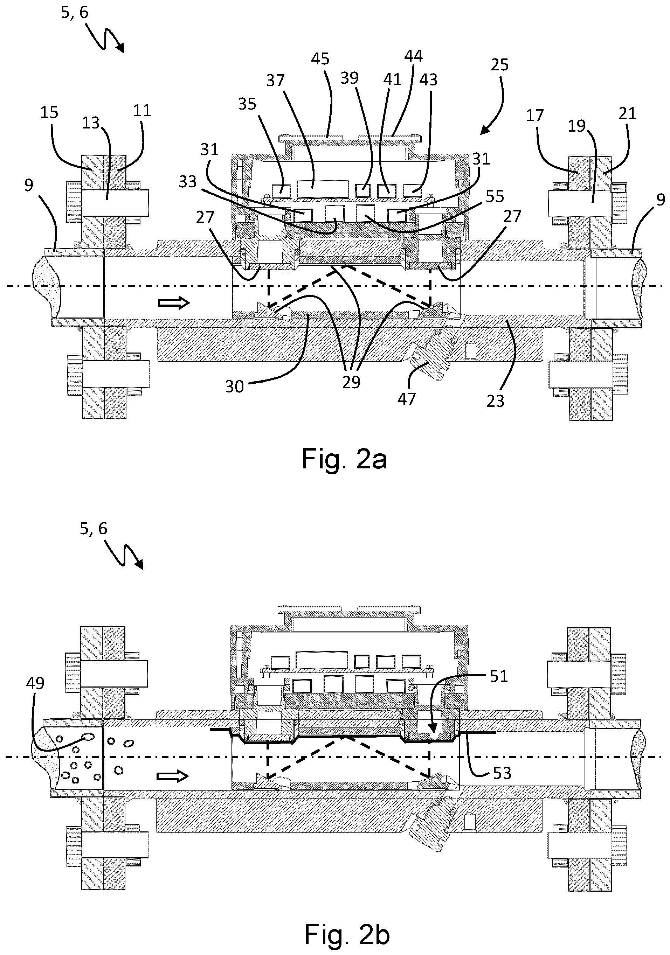

Figs. 2a,b show a longitudinal cross-section of a flow meter 5, 6 that is installed in a pipe 9 of the pipe network 1 of a water supply system or a district heating system. Here, the flow meter 5, 6 is a heat meter. The flow meter 5, 6 may be installed at a consumer household 3 or somewhere else in the pipe network 1 to determine a fluid flow through the pipe 9. The flow meter 5, 6 comprises an inlet flange 11 that is connected by bolts 13 to a flange 15 of the pipe 9. The flow meter 5, 6 further comprises an outlet flange 17 connected by bolts 19 to a flange 21 of the pipe 9. The inlet flange 11 and the outlet flange 17 are coaxially arranged at axial ends of a flow meter tube 23 of the flow meter 5, 6. The flow meter tube 23 of the flow meter 5, 6 thereby forms a flow channel as an intermediary section of the pipe 9 through which fluid, e.g. water and/or a thermal energy medium, flows from the inlet flange 11 to the outlet flange 17. The flow meter tube 23 therefore defines a flow channel through which the fluid flows in a designated flow direction (in Figs. 2a,b from left to right and indicated by an arrow).

The flow meter 5, 6 further comprises an electronic control unit 25 that houses electronics for measuring, storing, processing, displaying and communicating measured values. What values the flow meter 5, 6 measures and how it measures those values will be described below.

The embodiment of the flow meter 5, 6 as shown in Figures 2a,b comprises two ultrasonic transducers 27 each comprising a piezo element arranged to exchange ultrasonic signals between each other through the fluid flowing through the flow channel defined by the flow meter tube 23. In the shown example, the ultrasonic transducers 27 are arranged in parallel with an axial distance to each other and facing radially towards the flow channel within the flow meter tube 23. A mirror arrangement 29 within the flow meter tube 23 facilitates an essentially W-shaped acoustic path of the ultrasonic signal between the ultrasonic transducers 27 through the fluid flowing through the flow channel defined by the flow meter tube 23. Figures 2a,b show the W-shaped acoustic path of the exchanged ultrasonic signals as a dashed line.

The electronic control unit 25 is equipped with the following electronic components:

- an AD/DA converter 31 for each ultrasonic transducer 27 for converting analogue signals to digital signals and/or converting digital signals to analogue signals,
- a high frequency oscillator 33 for providing a high frequency signal,
- a memory 35 for storing data,
- an error code generator 55,
- a microcontroller 37 for processing data,
- an internal temperature sensor 39 for measuring the internal temperature within the electronic control unit 25,
- a crystal clock 41 for having clock time information of flow measurements,
- a radio element 43 for communicating wirelessly data to the data collection unit 7,
- a display 44 for displaying data and/or other information,
- and an input/output interface 45, e.g. an NFC, an optical eye or cable connector for communicating with an external mobile device 46 (see Fig. 1) connected to the input/output interface 45.

In the shown example, the flow meter 5, 6 further comprises a fluid temperature sensor 47 that is arranged in the flow meter tube 23 in thermal contact with the fluid flowing through the flow channel defined by the flow meter tube 23. The fluid temperature sensor 47 may be part of the flow meter 5, 6 as shown in figures 2a,b or it may be mounted in the pipe 9.

The ultrasonic flow meter 5, 6 determines the flow based on a time of flight (TOF) of ultrasonic signals in direction of the fluid flow and against the direction of the fluid flow. Therefore, a projection of the acoustic path onto the flow direction must be non-zero, e.g. as shown by the W-shaped acoustic path indicated in Figs. 2a,b as a dashed line. Here, the projection of the acoustic part onto the flow direction essentially corresponds to the axial distance between the two ultrasonic transducers 27. A phase difference $\Delta cp$ between the ultrasonic signal in flow direction compared to the ultrasonic signal against the flow direction is indicative of the fluid velocity in the flow channel defined by the flow meter tube 23. Knowing the inner cross-sectional area of a flow tube insert 30 within the flow meter tube 23, the flow q can be deduced from the phase difference $\Delta cp$ that scales with the fluid velocity in the flow tube insert 30. A correction function may be applied to properly transform the phase difference $\Delta\varphi$ to a measured flow q.

Figure 2b shows as an example three different problematic operational conditions of the flow meter 5, 6 that may inter alia occur independently from each other or in combination over the lifetime of the flow meter 5, 6. Firstly, cavitation and/or air bubbles 49 within the fluid may impair the flow measurement. The cavitation and/or air bubbles 49 may be due to an incorrect installation of the flow meter 5, 6 itself or caused by other components installed upstream of the flow meter 5, 6, e.g. a defect or incorrectly installed valve. If cavitation occurs within the flow meter 5, 6, it can, besides being detrimental to the flow measurement, have severe negative effects on the structure of the flow meter 5, 6, in particular on the mirror arrangement 29, the flow tube insert 30, and the ultrasonic transducers 27. Secondly, a piezo element of an ultrasonic transducer may be broken as indicated at position 51 of Fig. 2b. For example, cavitation may have damaged the piezo element of the ultrasonic transducer 27. Thirdly, fouling and scaling may develop a scaling layer 53 through which the acoustic path must travel one or more times. A scaling layer 53 on a protective cover of the piezo element may alter the piezo element's resonance frequency and/or reduce its signal strength. Such a scaling layer 53 may thus have a negative influence on the accuracy of the flow measurements.

It is the goal of the present invention to reliably determine at least one of such or other operational conditions of the ultrasonic flow meter 5, 6, e.g. cavitation or air bubbles 49, a broken piezo element 51, and/or a scaling layer 53, in order to take the appropriate service action. The invention makes use of the fact that the long-term accuracy of the flow meter 5, 6 depends on the invariability of at least two different predetermined operational variables of the ultrasonic flow meter 5. The at least two different predetermined operational variables are preferably selected from the group comprising:

- a flow rate q determined by the ultrasonic flow meter 5, 6,
- a signal strength $V_{pp}$ of at least one ultrasonic transducer 27 of the ultrasonic flow meter 5, 6,
- an absolute transit time $t_{abs}$ of an ultrasonic signal being exchanged by at least one ultrasonic transducer 27 of the ultrasonic flow meter 5, 6,
- a phase shift $\Delta cp$ between two ultrasonic signals being exchanged by at least one ultrasonic transducer 27 of the ultrasonic flow meter 5, 6,
- a fluid temperature $T_{fluid}$ measured by the fluid temperature sensor 47 being in thermal contact with the fluid flowing through the ultrasonic flow meter 5, 6, and
- an internal temperature $T_{internal}$ within the electronic control unit 25 of the ultrasonic flow meter 5, 6 measured by the internal temperature sensor 39 of the ultrasonic flow meter 5.

In fact, however, these pre-determined operational variables vary over the time of operation of the ultrasonic flow meter 5, 6. Therefore, it is the inventive idea to generate, for each of at least two of the different pre-determined operational variables, a variable-specific histogram by aggregating the occurrences of determined values of said operational variables in bins of said histogram. Thereby, it is possible to take into account the historical information about what operational conditions the flow meter 5, 6 has experienced. The histograms use up very little space in the memory 35 and may contain historic information of many years of operation. Once the histograms are filled with sufficient statistics, an operational condition of the ultrasonic flow meter 5, 6 can be determined at any time on demand or automatically triggered, wherein the diagnosis depends on the distribution in the histograms as long as the histograms are consistent with the determined operational condition of the ultrasonic flow meter 5, 6. The consistency between the histograms reduces the risks of false diagnoses and makes the determination of the operational condition of the ultrasonic flow meter 5, 6 more reliable and robust.

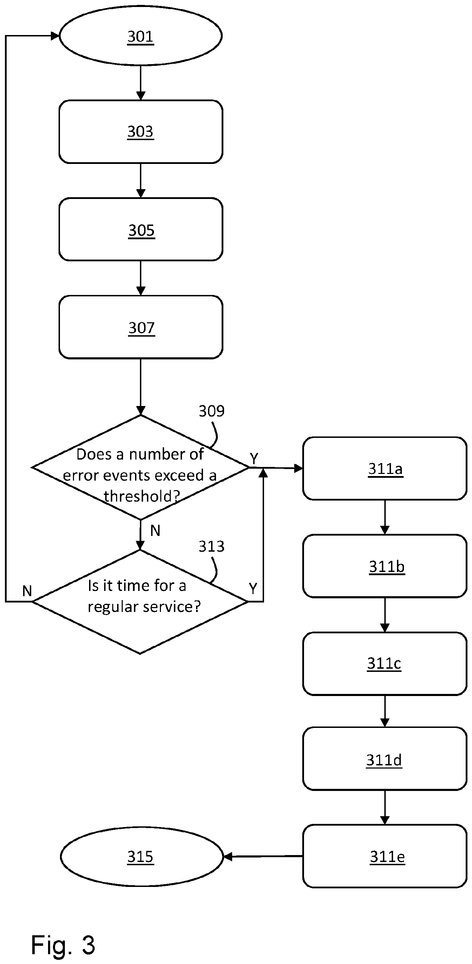

Figure 3 shows a flow chart of a preferred embodiment of the inventive method for determining an operational condition of the ultrasonic flow meter 5. The method may start with step 301 that may be repeated with each flow measurement of the ultrasonic flow meter 5, 6. In step 303, an error code generator 55 (see Figs. 2a,b) monitors for each flow measurement if an error event occurs that fulfils one or more of a plurality of pre-determined error type criteria. The error code generator 55 may generate a pre-determined error code for each error event depending on which error type criterion the error event fulfils. It should be noted that a flow measurement without an error may also be flagged with an error code, for example error code "0". An example of the plurality of pre-determined error type criteria with the corresponding error codes is shown in the table below:

| Code | Name |
| --- | --- |
| 0 | RET_AdK = 0, |
| 6 | RET_POLY_INDEX_NEGATIVE = 6, |
| 7 | RET_VALIDATE_ENV_INDEX_DIFF_TOO_LARGE = 7, |
| 8 | RET_VALIDATE_ENV_VALUE_DIFF_TOO_LARGE = 8, |
| 10 | RET_VALIDATE_ENV_TOO_LOW = 10, |
| 34 | RET_USS_VALIDATE_ENVELOPE_INDEX_TOO_HIGH = 34, |

(continued)

| Code | Name |
|------|------|
| - 44 | RET_USS_DRY_ERROR = 44, |

As an example, error code 44 indicates that the signal strength of the ultrasonic signal $V_{pp}$ was below a threshold. Such error events are counted as well as all "no error" events with error code "0". The signal strength $V_{pp}$ is preferably monitored since the ultrasonic flow meter was manufactured, so that initial measurements of a signal strength $V_{pp\text{-Init}}$ may be available as a reference. If $V_{pp}$ during normal operation falls below 80% of $V_{PP\_init}$, an error event with error code 44 is counted. Independent of the counting of the error events, the $V_{pp}$ measurement event is preferably filled in a histogram of signal strength $V_{pp}$, for example having bins of 25 mV in a total range of 0 to 300 mV.

Occurrences of the error events are preferably aggregated per error type criterium in step 303. Before, after or parallel to the aggregation of error events in step 303, at least two different variable-specific histograms are filled, in step 305, by aggregating the occurrences of determined values of at least two different pre-determined variables of the ultrasonic flow meter 5, 6 in histograms.

In step 307, the aggregated error events are analyzed and in step 309 checked whether a total or relative number aggregated occurrences of error events exceed a pre-determined threshold. If it does, steps 311a-e of determining the operational condition of the ultrasonic flow meter 5, 6 is triggered. In step 311a, a structural integrity of the flow channel may be evaluated on the basis of histograms of the absolute transit time $t_{abs}$, the signals strength $V_{pp}$ and the flow rate q. In step 311b, it may be checked how often the ultrasonic flow meter 5, 6 was exposed to cavitation based on the statistical distribution of the histograms of the absolute transit time $t_{abs}$, the signals strength $V_{pp}$ and the flow rate q.

In step 311c, the integrity of electronic components may be evaluated on the basis of the aggregated occurrences of error events fulfilling certain error type criteria. In step 311d, a health monitoring module, which may be internal of the flow meter 5, 6 or executed by a mobile device 46 connected via the input/output interface 45 with the flow meter 5, 6, is activated in order to send a diagnostic test signal to the ultrasonic transducers 27 and to receive a diagnostic test response signal from the ultrasonic transducers 27 for determining, in combination with the histogram of the absolute transit time $t_{abs}$, whether one or both of the ultrasonic transducers 27 are broken. In step 311e, a final assessment of the operational condition of the ultrasonic flow meter 5, 6 is made and an appropriate service action, if applicable, is triggered before the method ends with step 315. In case that the aggregated total or relative number of error events does not exceed a pre-determined threshold in step 309, the data aggregation may continue until it is time in step 313 for a regular service inspection at the end of the service interval. At the end 315 of the method, the data in one or more of the histograms and/or the aggregated error events may be reset to 0 or the aggregating may be resumed. If a remote device 46 of a service technician is connected to the ultrasonic flow meter 5, 6 via the input/output interface 45 of the flow meter 5, 6, it is advantageous to download the data of the histograms and the aggregated error events to the mobile device 46 and to clear the downloaded data from the memory 35 of the flow meter 5, 6 after a service action. The legacy histograms may be stored on the mobile device 46 for later comparison with actual histograms filled thereafter.

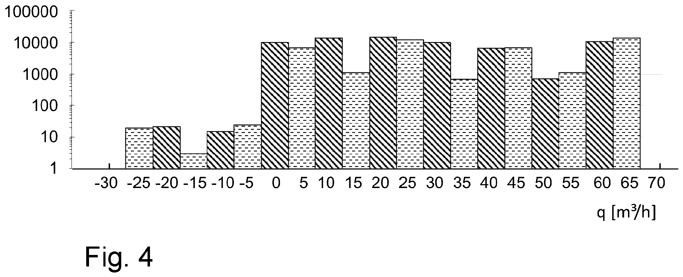

Figure 4 shows an example of a flow q histogram that is filled by the ultrasonic flow meter 5, 6 according to the present invention. The histogram shown in figure 4 counts the number of flow measurements per histogram bin, wherein each bin has a bin width of 5 m$^3$/h. The minimum flow bin ranges about a negative flow of -30 m$^3$/h and the highest bin ranges about a positive flow of 70 m$^3$/h. It should be noted that the histogram has a logarithmic scale and only a negligible amount of negative flow events is counted. Therefore, the ultrasonic flow meter 5, 6 has the correct orientation in the pipe. Many negative flow events would have indicated that the ultrasonic flow meter 5, 6 was installed with the wrong orientation. The highest bin about 70 m$^3$/h is not filled, which indicates that the ultrasonic flow meter 5, 6 has the appropriate size, because it has not reached its maximum flow. The relatively even distribution of the flow in the range 0-65 m$^3$/h supports that the operational condition of the ultrasonic flow meter 5, 6 is okay.

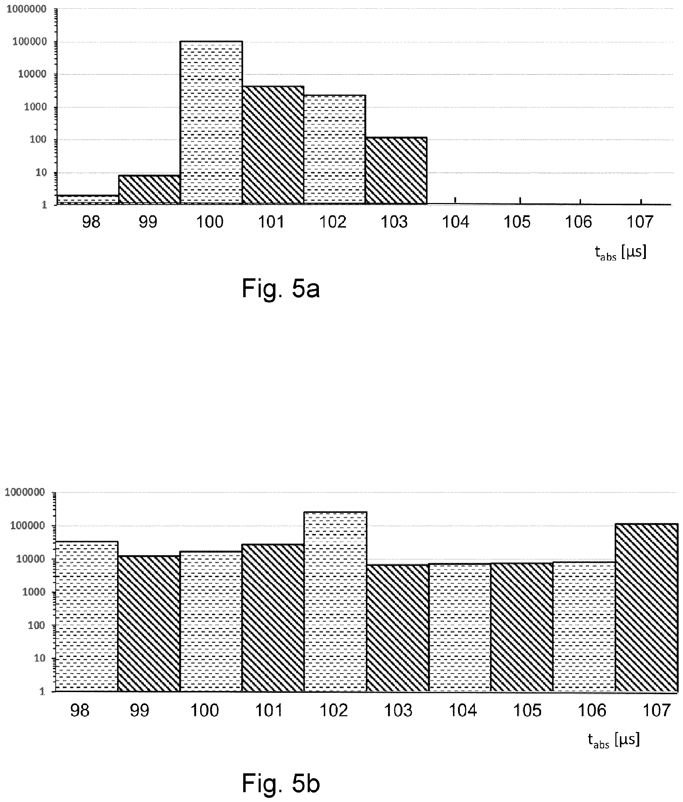

Fig. 5a shows a histogram of the absolute transit time $t_{abs}$ in bins of one microsecond. The distribution with a relatively narrow peak at 100 $\mu$s is expected for an intact ultrasonic flow meter5, 6, because the absolute transit time $t_{abs}$ should be invariant and only change with the fluid temperature. As the fluid temperature is typically stable for heat meters, the distribution of the absolute transit time $t_{abs}$ is expected to be invariant.

Fig. 5b shows the same histogram of the absolute transit time $t_{abs}$ in case of a problematic operational condition of the ultrasonic flow meter 5, 6. The distribution is not peaked and unexpectedly wide-spread. A cause of such an operational condition of the ultrasonic flow meter 5, 6 may be that the flow meter 5, 6 has run dry, has a defect transducer, or suffers from a scaling layer 53. Another histogram, e.g. of the signal strength $V_{pp}$ and/or of the flow rate q, may be used to narrow the options of possible operational conditions of the ultrasonic flow meter 5, 6 down.

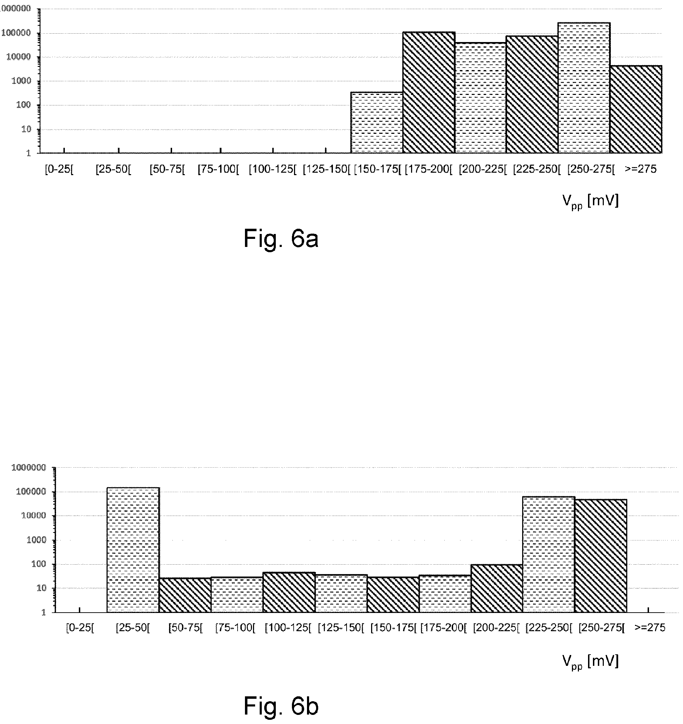

Fig. 6a shows a histogram of the signal strength $V_{pp}$ in bins of 25 mV. The distribution is Fig. 6a shows all events in or above the bin in the range 150-175mV. This supports the diagnosis that the ultrasonic transducer is not broken. However, there is large spread in the signal strength $V_{pp}$ which is typically expected to have a clear peak around an initial value $V_{pp\_init}$ recorded when the flow meter was brand new. A large spread in the signal strength $V_{pp}$ suggests that the

internal temperature of the ultrasonic flow meter 5, 6 varied at lot. Therefore, it is sensible to consider the histogram of internal temperatures to see if this diagnosis is consistent with the distribution of the internal temperatures.

Fig. 6b shows the same histogram of the signal strength $V_{pp}$ in case of a more problematic operational condition of the ultrasonic flow meter 5, 6. The many events in the bin ranging from 25-50 mV suggests that the flow meter was running dry for a long time. This histogram would be consistent with the diagnosis of a dry running flow meter 5, 6 derived from the histogram of absolute transit time $t_{abs}$ shown in Fig. 5b.

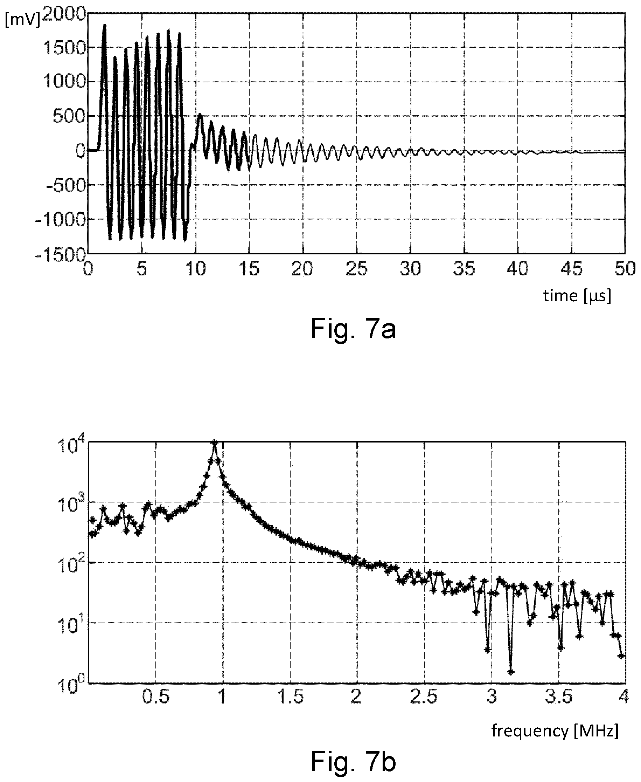

Figs. 7a,b, 8a,b and 9a,b illustrate examples how a piezo test functionality may work. The ultrasonic flow meter 5, 6 itself or a connected mobile device 46 may apply a diagnostic test signal to an ultrasonic transducer 27 of the ultrasonic flow meter 5, 6. The piezo element of the ultrasonic transducer 27 of the ultrasonic flow meter 5, 6 is thereby excited to mechanically swing with its axial or radial resonance frequency. When the diagnostic test signal is stopped, a ring-down signal is received as a diagnostic test response signal from the resonantly swinging piezo element. As can be seen from Fig. 7a, where the periodic diagnostic test signal and the diagnostic test response signal is shown over time in microseconds, the periodic diagnostic test signal of approximately 1 MHz is applied for 10 microseconds to hit an axial resonance frequency of the piezo element. A radial resonance frequency of the piezo element could have been aimed at by using a periodic diagnostic test signal of approximately 200 kHz. A ring-down signal can be seen in the time domain ranging from 10-45 microseconds. In addition to the time domain shown in Fig. 7a, a Fourier transformation to the frequency domain as shown in Fig. 7b may give additional information about the ring-down signal, wherein only the ring-down signal in the range of 15-45 microseconds is sampled for the Fourier transformation. It is useful to give the piezo element some time, i.e. here additional 5 microseconds, to finds its proper resonance frequency. Fig. 7b shows a clear peak close to 1 MHz as it is expected from an intact piezo element. Also, the time domain shown in Fig. 7a shows an expected ring-down behaviour of an intact piezo element.

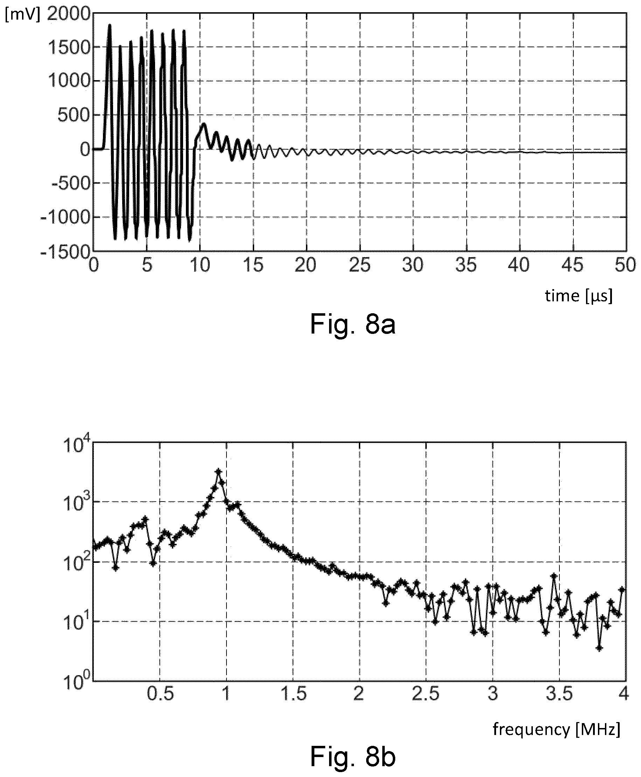

Figs. 8a,b show the same plots as in Fig. 7a,b in case of a broken piezo element. As can be seen from the time domain in Fig. 8a, the signal strength of the ring-down signal is reduced compared to the ring-down signal shown in Fig. 7a. Furthermore, the frequency domain in Fig. 8b shows a heavily suppressed peak at 1 MHz and a shoulder just above 1 MHz. This is an indication of the piezo element being broken into two pieces.

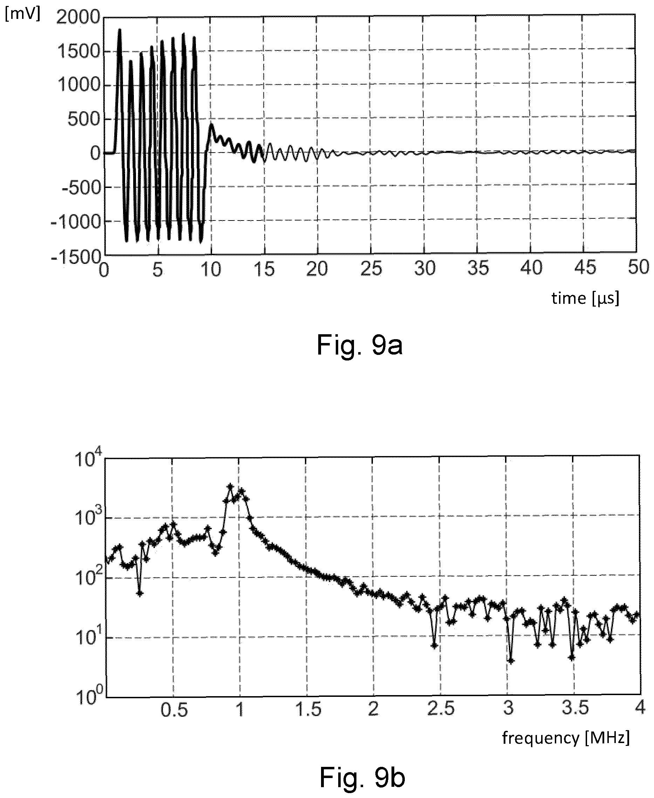

Figs. 9a,b show the same plots as in Fig. 7a,b in case the piezo element or its protective cover is covered by a scaling layer 53. As can be seen from the time domain in Fig. 9a, the signal strength of the ring-down signal is heavily reduced and no clear resonance frequency is found. Furthermore, the frequency domain in Fig. 9b shows two similarly low peaks around 1 MHz. This is an indication that a scaling layer 53 in front of the piezo element has shifted the axial resonance frequency of the piezo element so that it does not resonate properly anymore with the injected periodic diagnostic test signal.

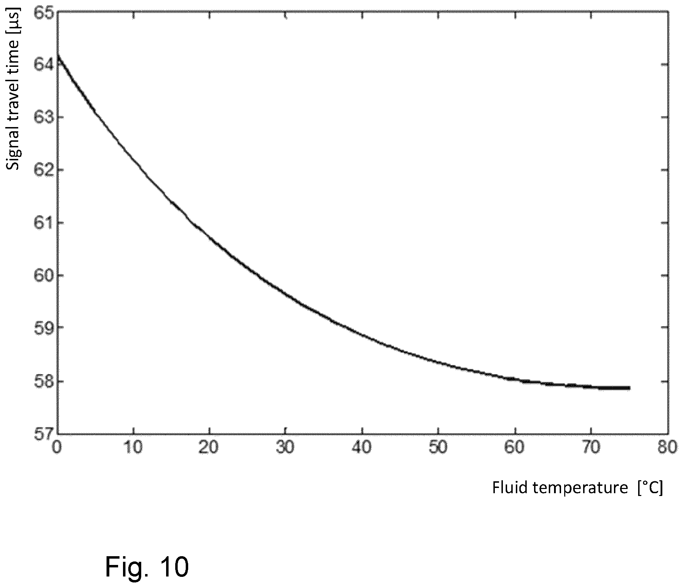

Fig. 10 shows an example of a physical model in form of the ultrasonic signal travel time as a function of the fluid temperature. As can be seen from Fig. 10, the ultrasonic signal travel time reduces about 10% when the fluid temperature rises from 0°C to 75°C. This is due to the physical fact that the speed of sound in said fluid increases with the fluid temperature. So, a histogram of the absolute transit time $t_{abs}$ should correlate with a histogram of fluid temperatures. Thus, a histogram of the absolute transit time $t_{abs}$ may show a statistical relevant shift to lower absolute transit times $t_{abs}$ which may be consistent with a statistical relevant shift in the fluid temperature histogram to higher fluid temperatures. As a consequence, a statistical relevant shift to higher absolute transit times $t_{abs}$ that cannot be explained by a statistical relevant shift to lower fluid temperatures may be an indication of a problematic operational condition of the ultrasonic flow meter.

Where, in the foregoing description, integers or elements are mentioned which have known, obvious or foreseeable equivalents, then such equivalents are herein incorporated as if individually set forth. Reference should be made to the claims for determining the true scope of the present disclosure, which should be construed so as to encompass any such equivalents. It will also be appreciated by the reader that integers or features of the disclosure that are described as optional, preferable, advantageous, convenient or the like are optional and do not limit the scope of the independent claims.

The above embodiments are to be understood as illustrative examples of the disclosure. It is to be understood that any feature described in relation to any one embodiment may be used alone, or in combination with other features described, and may also be used in combination with one or more features of any other of the embodiments, or any combination of any other of the embodiments. While at least one exemplary embodiment has been shown and described, it should be understood that other modifications, substitutions and alternatives are apparent to one of ordinary skill in the art and may be changed without departing from the scope of the subject matter described herein, and this application is intended to cover any adaptations or variations of the specific embodiments discussed herein.

In addition, "comprising" does not exclude other elements or steps, and "a" or "one" does not exclude a plural number. Furthermore, characteristics or steps which have been described with reference to one of the above exemplary embodiments may also be used in combination with other characteristics or steps of other exemplary embodiments described above. Method steps may be applied in any order or in parallel or may constitute a part or a more detailed version of another method step. It should be understood that there should be embodied within the scope of the patent warranted hereon all such modifications as reasonably and properly come within the scope of the contribution to the art. Such modifications, substitutions and alternatives can be made without departing from the spirit and scope of the disclosure, which should be determined from the appended claims and their legal equivalents.

List of reference numerals:

| 1 | pipe network |
|---|---|
| 3 | consumer household |
| 5 | resident ultrasonic flow meter |
| 6 | district ultrasonic flow meter |
| 7 | data collecting station |
| 9 | pipe |
| 11 | inlet flange |
| 13 | bolts |
| 15 | flange of the pipe |
| 17 | outlet flange |
| 19 | bolts |
| 21 | flange of the pipe |
| 23 | flow meter tube |
| 25 | electronic control unit |
| 27 | ultrasonic transducers |
| 29 | mirror arrangement |
| 30 | flow tube insert |
| 31 | AD/DA converter |
| 33 | high frequency oscillator |
| 35 | memory |
| 37 | microcontroller |
| 39 | internal temperature sensor |
| 41 | crystal clock |
| 43 | radio element |
| 44 | display |
| 45 | input/output interface |
| 47 | fluid temperature sensor |
| 49 | cavitation and/or air bubbles |
| 51 | broken piezo element |
| 53 | scaling layer |
| 55 | error code generator |
| HES | remote server of a head-end system |

**Claims**

1.  A method for determining an operational condition of an ultrasonic flow meter (5, 6), the method comprising:

    - continuously, regularly, and/or on demand determining values of at least two different pre-determined operational variables ($q$, $t_{abs}$, $V_{pp}$, $T_{internal}$, $T_{fluid}$, $\Delta cp$) of the ultrasonic flow meter (5, 6);
    - for each of the at least two different pre-determined operational variables ($q$, $t_{abs}$, $V_{pp}$, $T_{internal}$, $T_{fluid}$, $\Delta\varphi$), filling a variable-specific histogram by aggregating the occurrences of the determined values of said operational variable ($q$, $t_{abs}$, $V_{pp}$, $T_{internal}$, $T_{fluid}$, $\Delta\varphi$) in bins of said histogram; and
    - determining an operational condition of the ultrasonic flow meter (5, 6) based on a statistical distribution in one of the histograms if a statistical distribution in another one of the histograms is consistent with said operational condition of the ultrasonic flow meter (5, 6).

2.  The method of claim 1, further comprising:

    - continuously, regularly, and/or on demand monitoring if error events occur that fulfil one or more of a plurality of pre-determined error type criteria;
    - aggregating occurrences of said error events preferably per error type criterion; and
    - triggering the step of determining the operational condition of the ultrasonic flow meter (5, 6) by receiving a request command and/or when a total or relative number of error events exceeds a pre-determined threshold.

3. The method of claim 2, wherein the histograms used to determine the operational condition of the ultrasonic flow meter (5, 6) are dependent on which type of error events has occurred in a total or relative number exceeding a pre-determined threshold.

4. The method of claim 3, wherein an algorithm defines which histograms are used for which type of error events, wherein the algorithm is executed by a health monitoring module, wherein the health monitoring module is integrated into the ultrasonic flow meter (5, 6), into a mobile device (46) being in communication connection with the ultrasonic flow meter (5, 6), and/or into a remote server (HES) being in communication connection with the ultrasonic flow meter (5, 6).

5. The method of any of the preceding claims, wherein said one of the histograms for determining the operational condition of the ultrasonic flow meter (5, 6) is correlated by a physical model with said another one of the histograms being consistent with said operational condition of the ultrasonic flow meter (5, 6).

6. The method of any of the preceding claims, wherein an absolute value of a correlation coefficient between said one of the histograms and said another one of the histograms is at least 0.6.

7. The method of any of the preceding claims, wherein the at least two different pre-determined operational variables ($q$, $t_{abs}$, $V_{pp}$, $T_{inter\text{-}nal}$, $T_{fluid}$, $\Delta\varphi$) are selected from the group comprising:

   - a flow rate ($q$) determined by the ultrasonic flow meter (5, 6),
   - a signal strength ($V_{pp}$) of at least one ultrasonic transducer (27) of the ultrasonic flow meter (5, 6),
   - an absolute transit time ($t_{abs}$) of an ultrasonic signal being exchanged by at least one ultrasonic transducer (27) of the ultrasonic flow meter (5, 6),
   - a phase shift ($\Delta\varphi$) between two ultrasonic signals being exchanged by at least one ultrasonic transducer (27) of the ultrasonic flow meter (5, 6),
   - a fluid temperature ($T_{fluid}$) measured by a fluid temperature sensor (47) being in thermal contact with the fluid flowing through the ultrasonic flow meter (5, 6), and
   - an internal temperature ($T_{internal}$) within the ultrasonic flow meter (5, 6) measured by an internal temperature sensor (47) of the ultrasonic flow meter (5, 6).

8. The method of any of the preceding claims, wherein determining the operational condition of the ultrasonic flow meter (5, 6) further comprises determining whether or not the ultrasonic flow meter (5, 6) has been exposed to cavitation (49) to a flow measurement impairing degree, wherein distributions of

   - a histogram of flow rates ($q$) determined by the ultrasonic flow meter (5, 6),
   - a histogram of signal strengths ($V_{pp}$) of at least one ultrasonic transducer (27) of the ultrasonic flow meter (5, 6), and
   - a histogram of absolute transit times ($t_{abs}$) of an ultrasonic signal being exchanged by at least one ultrasonic transducer (27) of the ultrasonic flow meter (5, 6),

   are in combined evaluation indicative of whether or not the ultrasonic flow meter (5, 6) has been exposed to cavitation (49) to a flow measurement impairing degree.

9. The method of any of the preceding claims, wherein determining the operational condition of the ultrasonic flow meter (5, 6) further comprises determining hardware degradation in the electronics of the ultrasonic flow meter (5, 6) and/or in a fluid temperature sensor (47) being in thermal contact with the fluid flowing through the ultrasonic flow meter (5, 6), wherein discrepancies between distributions of

   - a histogram of fluid temperatures ($T_{fluid}$) measured by the fluid temperature sensor (47), and
   - a histogram of internal temperatures ($T_{internal}$) within the ultrasonic flow meter (5, 6) measured by an internal temperature sensor (47) of the ultrasonic flow meter (5, 6), and/or
   - a histogram of absolute transit times ($t_{abs}$) of an ultrasonic signal being exchanged by at least one ultrasonic transducer (27) of the ultrasonic flow meter (5, 6),

   are indicative of hardware degradation in the electronics of the ultrasonic flow meter (5, 6) and/or in the fluid temperature sensor (47).

10. The method of any of the preceding claims, wherein a distribution of

- a histogram of fluid temperatures ($T_{fluid}$) measured by a fluid temperature sensor (47) being in thermal contact with the fluid flowing through the ultrasonic flow meter (5, 6), and
- a known speed of sound in the fluid as a function of the fluid temperature ($T_{fluid}$),

is used in combined evaluation to confirm an operational condition of the ultrasonic flow meter (5, 6) based on a distribution of a histogram of absolute transit times ($t_{abs}$) of an ultrasonic signal being exchanged by at least one ultrasonic transducer (27) of the ultrasonic flow meter (5, 6).

11. The method of any of the preceding claims, wherein certain bins of histograms are neglected for determining the operational condition of the ultrasonic flow meter (5, 6), wherein the neglected bins are filled with less than a minimum number of values and/or lie outside a relevant variable range.

12. The method of any of the preceding claims, wherein the histograms are filled with values having no time stamp.

13. The method of any of the preceding claims, further comprising

- stopping filling one or more of the histograms,
- storing the one or more stopped histograms as legacy histograms,
- emptying the one or more stopped histograms,
- restarting filling the emptied histograms as actual histograms, wherein determining the operational condition of the ultrasonic flow meter further comprises comparing one or more of the actual histograms with one or more of the corresponding legacy histograms.

14. The method of any of the preceding claims, wherein determining the operational condition of the ultrasonic flow meter (5, 6) further comprises comparing one or more of the histograms with one or more of reference histograms, wherein the reference histograms are stored in the ultrasonic flow meter (5, 6) before shipping of the ultrasonic flow meter (5, 6).

15. The method of any of the preceding claims, further comprising

- continuously, regularly, and/or on demand sending, by a health monitoring module, at least one diagnostic test signal to at least one ultrasonic transducer (27) of the ultrasonic flow meter (5, 6), and
- receiving, by the health monitoring module, at least one diagnostic test response signal from the at least one ultrasonic transducer (26) of the ultrasonic flow meter (5, 6),

wherein determining the operational condition of the ultrasonic flow meter (5, 6) further comprises evaluating the received diagnostic test response signal.

16. The method of claim 15, wherein the at least one diagnostic test response signal is a ring-down signal.

17. The method of any of the claims 14 to 16, wherein the at least one diagnostic test signal differs from regular signals for flow measurement, wherein the at least one diagnostic test signal is appended to regular signals for flow measurement or sent between two regular signals for flow measurement.

18. The method of any of the claims 14 to 17, wherein the at least one diagnostic test signal is a periodic signal with a frequency that corresponds to a radial or axial resonance frequency of a piezo element of the at least one ultrasonic transducer (27) of the ultrasonic flow meter (5, 6), preferably in a range of 50 kHz to 1.5 MHz.

19. The method of any of the claims 14 to 17, wherein the at least one diagnostic test signal is a step-function-shaped DC signal.

20. The method of any of the preceding claims, wherein determining the operational condition of the ultrasonic flow meter (5, 6) further comprises detecting frequency shifts of a high frequency ultrasonic oscillator (33) used for driving at least one ultrasonic transducer (27) of the ultrasonic flow meter (5, 6) relative to a frequency of a low frequency crystal clock (41) of the flow meter, wherein a detected frequency shift triggers an error event and/or a frequency correction action.

21. The method of any of the preceding claims, wherein determining the operational condition of the ultrasonic flow meter (5, 6) is at least partly performed by a remote server (HES) being in communication connection with the ultrasonic flow meter (5, 6), wherein the remote server (HES) has received wirelessly information about the histograms from the ultrasonic flow meter (5, 6).

22. A computer program comprising instructions which, when the program is executed by an ultrasonic flow meter, cause the ultrasonic flow meter (5, 6) to carry out the method of any of the preceding claims.

23. An ultrasonic flow meter (5, 6) being configured to carry out the method of any of the claims 1 to 21.

Fig. 1

Fig. 2a

Fig. 2b

Fig. 3

Fig. 4

Fig. 5a

Fig. 5b

Fig. 6a

Fig. 6b

Fig. 7a

Fig. 7b

Fig. 8a

Fig. 8b

Fig. 9a

Fig. 9b

Fig. 10

Europäisches
Patentamt
European
Patent Office
Office européen
des brevets

# EUROPEAN SEARCH REPORT

Application Number

EP 24 18 4061

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | FOLKESTAD T ET AL: "CHIRP EXCITATION OF ULTRASONIC PROBES AND ALGORITHM FOR FILTERING TRANSIT TIMES IN HIGH-RANGEABILITY GAS FLOW METERING", IEEE TRANSACTIONS ON ULTRASONICS, FERROELECTRICS, AND FREQUENCY CONTROL, IEEE, USA, vol. 40, no. 3, 1 May 1993 (1993-05-01), pages 193-215, XP000382839, ISSN: 0885-3010, DOI: 10.1109/58.216833 | 1,11,12, 14,21-23 | INV. G01F1/667 G01F25/10 |
| A | * page 208 * | 2-10,13, 15-20 | |
| A | US 2023/265871 A1 (GAEDE RAPHAEL [DE] ET AL) 24 August 2023 (2023-08-24) * paragraphs [0026], [0050], [0057] – [0061]; figures 5,6,10,11 * | 1-23 | |
| A | CN 114 689 150 A (ZHEJIANG JINKA SMART WATER AFFAIR LTD COMPANY) 1 July 2022 (2022-07-01) * claims 1,2 * | 1-23 | |
| A | EP 3 112 823 A1 (KAMSTRUP AS [DK]) 4 January 2017 (2017-01-04) * paragraphs [0095], [0096]; claim 1 * | 1-23 | TECHNICAL FIELDS SEARCHED (IPC) G01F |
| A | CN 113 720 425 A (FUJIAN LANMIMA IOT TECH CO LTD) 30 November 2021 (2021-11-30) * paragraphs [0013], [0019], [0033] * | 1-23 | |
| A | US 2022/196451 A1 (CORNWALL MARK K [US] ET AL) 23 June 2022 (2022-06-23) * claims 1-6; figure 4 * | 1-23 | |

The present search report has been drawn up for all claims

| Place of search | Date of completion of the search | Examiner |
|---|---|---|
| The Hague | 25 November 2024 | Reeb, Bertrand |

## ANNEX TO THE EUROPEAN SEARCH REPORT
## ON EUROPEAN PATENT APPLICATION NO.

EP 24 18 4061

This annex lists the patent family members relating to the patent documents cited in the above-mentioned European search report.
The members are as contained in the European Patent Office EDP file on
The European Patent Office is in no way liable for these particulars which are merely given for the purpose of information.

25-11-2024

| Patent document cited in search report | Publication date | Patent family member(s) | Publication date |
|---|---|---|---|
| US 2023265871 A1 | 24-08-2023 | CN 116625595 A<br>EP 4230987 A1<br>JP 7522815 B2<br>JP 2023121127 A<br>US 2023265871 A1 | 22-08-2023<br>23-08-2023<br>25-07-2024<br>30-08-2023<br>24-08-2023 |
| CN 114689150 A | 01-07-2022 | NONE | |
| EP 3112823 A1 | 04-01-2017 | NONE | |
| CN 113720425 A | 30-11-2021 | NONE | |
| US 2022196451 A1 | 23-06-2022 | AU 2021250855 A1<br>US 2022196451 A1 | 07-07-2022<br>23-06-2022 |

EPO FORM P0459

For more details about this annex : see Official Journal of the European Patent Office, No. 12/82

**EP 4 671 702 A1**